# EUROPÄISCHE PATENTSCHRIFT

(11) **EP 1 879 018 B1**
(45) Veröffentlichungstag und Bekanntmachung des Hinweises auf die Patenterteilung: **19.08.2015**
(21) Anmeldenummer: 06117020.5
(22) Anmeldetag: 12.07.2006
(51) Int. Cl.: G01N 21/01, G01N 21/47, G01N 21/84

(54) **Analysesystem und Verfahren zur Analyse einer Probe auf einem analytischen Testelement**
Analysis system and method for analysing a sample on an analytical test element
Système d'analyse et procédé destinés à l'analyse d'un échantillon sur un élément de test analytique

(43) Veröffentlichungstag der Anmeldung: 16.01.2008
(73) Patentinhaber: F. Hoffmann-La Roche AG, 4070 Basel (CH); Roche Diagnostics GmbH, 68305 Mannheim (DE)
(72) Erfinder: Roesicke, Bernd, 68305 Mannheim (DE); Kalveram, Stefan, 68519 Viernheim (DE); Wehowski, Frederic, 68766 Hockenheim (DE); Götz, Michael, 64385 Reichelsheim (DE)
(74) Vertreter: Herzog, Fiesser & Partner Patentanwälte PartG mbB

(56) Entgegenhaltungen:
- EP-A- 0 167 661
- EP-A2- 0 376 111
- EP-A2- 0 871 033
- EP-A2- 1 508 807
- DE-A1- 3 921 391
- DE-A1- 4 328 816
- DE-A1- 19 822 770

## Beschreibung

Die Erfindung bezieht sich auf ein Analysesystem und ein Verfahren zur Analyse einer Probe auf einem Testelement, insbesondere zur Messung der Konzentration von Glukose in einer Körperflüssigkeit auf einem Teststreifen.

Zur Analyse von Proben, beispielsweise Körperflüssigkeiten wie Blut oder Urin, werden häufig Analysesysteme verwendet, bei denen sich die zu analysierenden Proben auf einem Testelement befinden und in einem Testfeld gegebenenfalls mit einer oder mehreren Reagenzien auf dem Testelement reagieren, bevor sie analysiert werden. Die optische, insbesondere photometrische, und die elektrochemische Auswertung von Testelementen stellen die gebräuchlichsten Verfahren zur schnellen Bestimmung der Konzentration von Analyten in Proben dar. Analysesysteme mit Testelementen zur Probenanalyse werden allgemein im Bereich der Analytik, der Umweltanalytik und vor allem im Bereich der medizinischen Diagnostik eingesetzt. Insbesondere im Bereich der Blutglukosediagnostik aus Kapillarblut besitzen Testelemente, die photometrisch oder elektrochemisch ausgewertet werden, einen großen Stellenwert.

Es gibt verschiedene Formen von Testelementen. Bekannt sind zum Beispiel im Wesentlichen quadratische Plättchen, die auch als Slides bezeichnet werden, in deren Mitte sich ein mehrschichtiges Testfeld befindet. Diagnostische Testelemente, die streifenförmig ausgebildet sind, werden als Teststreifen bezeichnet. Im Stand der Technik sind Testelemente umfassend beschrieben, beispielsweise in den Dokumenten DE-A 197 53 847, EP-A 0 821 233, EP-A 0 821 234 oder WO 97/02487. Die vorliegende Erfindung bezieht sich auf Testelemente beliebiger Form, insbesondere auf streifenförmige Testelemente.

Zur analytischen Untersuchung einer Probe auf einem Testelement sind im Stand der Technik Testelement-Analysesysteme bekannt, die eine Testelement-Aufnahme zum Positionieren des Testelements in einer Messposition und eine Mess- und Auswerteeinrichtung zur Durchführung einer Messung und Ermittlung eines hierauf resultierenden Analyseresultats enthalten.

WO 00/19185 A1 bezieht sich auf eine Vorrichtung zur photometrischen Auswertung von Testelementen, beinhaltend
- eine Beleuchtungseinheit mit mindestens einer ersten und einer zweiten Lichtquelle,
- eine Halterung zur Aufnahme eines Testelements mit einer Nachweiszone in der Weise, dass die Nachweiszone gegenüber der Beleuchtungseinheit positioniert wird,
- eine Detektionseinheit mit mindestens einem Detektor, der von der Nachweiszone reflektiertes oder durch die Nachweiszone transmittiertes Licht detektiert,
- eine Steuerungseinheit, die die beiden Lichtquellen aktiviert und das von der Detektionseinheit generierte Signal als Detektionssignal aufnimmt und
- eine Auswerteeinheit, die die Detektionssignale auswertet, um die in der Probe enthaltene Analytkonzentration zu ermitteln.

Zur Halterung des Testelementes in der Auswerteposition besitzt diese Positioniereinrichtung einen verschiebbar gelagerten Zapfen mit einem nach unten konisch zulaufenden Ende. Bei geeigneter Positionierung befindet sich die Spitze des Zapfens in einer Ausnehmung des Testelementes, so dass das Testelement in Richtung seiner Längsachse fixiert und positioniert wird. Der Zapfen kann auch dazu dienen, die Anwesenheit eines Testelementes beziehungsweise dessen Positionierung elektrisch zu signalisieren. Hierzu wird der Zapfen elektrisch leitfähig ausgeführt und auf der ihm gegenüberliegenden Seite der Vorrichtung ein Kontakt vorgesehen. Ohne ein Testelement wird der Zapfen mittels einer Feder gegen den Kontakt gedrückt und ein elektrischer Kontakt zwischen diesen beiden Elementen hergestellt. Wird nun ein Testelement eingeschoben, so schiebt es sich zunächst zwischen Zapfen und Kontakt, so dass der elektrische Kontakt aufgehoben wird. Beim Weiterschieben greift jedoch der Zapfen durch die Nut des Testelementes hindurch und der elektrische Kontakt schließt sich erneut.

EP 0 618 443 A1 bezieht sich auf ein Teststreifen-Analysesystem bestehend aus einem Auswertegerät mit einer Teststreifenhalterung und den passenden Teststreifen. Die Teststreifenhalterung dient dazu, den Teststreifen in einer definierten Position gegenüber einer Messeinheit zu positionieren. Sie weist eine Teststreifen-Auflage und eine Führung für den Teststreifen auf.

WO 01/48461 A1 hat ein Testelement-Analysesystem zur analytischen Untersuchung einer Probe zum Gegenstand. Das Analysesystem umfasst Testelemente mit einer Tragfolie und einem an einer Flachseite der Tragfolie befestigten Testfeld, das zur Durchführung einer Analyse derartig mit der Probe in Kontakt gebracht wird, dass flüssige Probenbestandteile in das Testfeld eindringen, wobei das Testfeld ein Reagenzsystem enthält, dessen Reaktion mit Bestandteilen der Probe zu einer optisch messbaren, für die Analyse charakteristischen Änderung in einer Detektionszone und auf der der Tragfolie zugewandten Seite des Testfeldes führt. Ferner umfasst das Analysesystem ein Auswertegerät mit einer Testelementhalterung zur Positionierung eines Testelements in einer Messposition und eine Messeinrichtung zur Messung der optisch messbaren Änderung in der Detektionszone, wobei die Messeinrichtung einen Lichtsender zur Beleuchtung der Detektionszone mit Primärlicht und einen Detektor zur Detektion des dabei von der Detektionszone diffus reflektierten Sekundärlichtes aufweist.

EP 0 645 627 A1 betrifft eine Messvorrichtung mit einem darin enthaltenen Multizonensensor, der zur elektrochemischen Analyse von Proben auf den einzelnen Sensoren des Multizonensensors vorgesehen ist. Die Messvorrichtung enthält eine Positionierungsfeder, die einen Haken aufweist, der zum Eingreifen in Positionierungskerben des Multizonensensors vorgesehen ist. Die Positionierungskerben sind entlang des Multizonensensors angeordnet und definieren eine Vielzahl von Positionen des Multizonensensors relativ zum Gehäuse der Messvorrichtung, in denen der Haken der Positionierungsfeder in die Kerben eingreift.

DE 198 22 770 A1 offenbart ein weiteres System zum Vermessen von Teststreifen.

Viele solcher bekannter Analysesysteme werden aufwendig und kostenintensiv aus einer Vielzahl von einzeln gefertigten und anschließend zu montierenden Einzelteilen hergestellt. Insbesondere die im Stand der Technik bekannten Anordnungen zum Positionieren und Verriegeln von Testelementen in einer Analyseposition werden üblicherweise aus mehreren einzelnen Kunststoffspritzgussteilen und Federelementen zusammengesetzt. Die getrennten Herstellungsprozesse und die Montage der Einzelteile sind kostenintensiv und fuhren zu Toleranzen in der Gesamtpositionierung des Testelements. Meist korrespondieren diese Teile mit der Gehäusestruktur, so dass bezüglich der messtechnischen Richtigkeit lange Toleranzketten zu berücksichtigen sind, was wiederum zu hohen Kosten durch hochpräzise Teile und Prozesse führt.

Es ist daher Aufgabe der Erfindung, die Nachteile des Standes der Technik zu vermeiden und insbesondere ein Analysesystem mit kostengünstigen Komponenten, insbesondere mit einer kostengünstigen Testelement-Aufnahme bereitzustellen.

Diese Aufgabe wird erfindungsgemäß gelöst durch ein Analysesystem zur Analyse einer Probe auf einem analytischen Testelement gemäß Anspruch 1.

Das erfindungsgemäße Analysesystem dient zur Analyse einer Probe auf einem analytischen Testelement. Bei der Probe handelt es sich zum Beispiel um eine Körperflüssigkeit, insbesondere um Blut oder interstitielle Flüssigkeit. Die Untersuchung von Blutproben oder von interstitieller Flüssigkeit ermöglichen in der klinischen Diagnostik das frühzeitige und zuverlässige Erkennen von pathologischen Zuständen sowie die gezielte und fundierte Kontrolle von Körperzuständen. Die medizinische Diagnostik setzt stets die Gewinnung einer Probe aus Blut oder interstitieller Flüssigkeit des zu untersuchenden Individuums voraus.

Zur Gewinnung der Probe kann die Haut zum Beispiel an der Fingerbeere oder dem Ohrläppchen der zu untersuchenden Person mit Hilfe einer sterilen, scharfen Lanzette perforiert werden, um so eine geringe Menge Blut oder interstitielle Flüssigkeit für die Analyse zu gewinnen. Insbesondere eignet sich die vorliegende Erfindung für die Analyse einer Probe, die unmittelbar nach der Probengewinnung durchgeführt wird.

Vor allem im Bereich des sogenannten "home-monitoring", also dort, wo medizinische Laien selbst einfache Analysen des Blutes oder der interstitiellen Flüssigkeit durchführen, und dort insbesondere für die regelmäßige, mehrmals täglich durchzuführende Blutgewinnung durch Diabetiker für die Kontrolle der Blutglukosekonzentration, werden Lanzetten und dazu passende Geräte (sogenannte Stechhilfen) angeboten, die eine möglichst schmerzarme und reproduzierbare Probengewinnung ermöglichen.

Die Probe wird zur Durchführung der Messungen auf ein analytisches Testelement aufgebracht, das Reagenzien (zum Beispiel in einem Testfeld) enthält. Wenn die Reagenzien die Probe kontaktieren, führt eine Reaktion des in der Probe enthaltenen Analyten mit den Reagenzien zu einer physikalisch messbaren Veränderung des Testelements, die mit der Konzentration des Analyten korreliert ist.

Eine Messanordnung des erfindungsgemäßen Analysesystems dient zum Messen dieser Veränderung. Die bei den Messungen der Messanordnung erhaltenen Messwerte dienen zur Bestimmung der Konzentration des Analyten in der Probe.

Das Analysesystem kann zur Durchführung einer elektrochemischen und/oder photometrischen Analyse ausgelegt sein.

Bei photometrischen Analysesystemen enthalten die Testelemente ein Reagenzsystem, dessen Reaktion mit dem Analyten zu einer photometrisch nachweisbaren Veränderung (einem Farbumschlag) führt. Die Reagenzien befinden sich dabei üblicherweise in einem Testfeld des Testelements, wobei deren Farbe sich in Abhängigkeit von der Konzentration ändert. Diese Farbänderung lässt sich mit Hilfe einer Messanordnung quantitativ durch Reflexionsphotometrie bestimmen.

Elektrochemische Testelemente enthalten ein elektrochemisches Reagenzsystem, dessen Reaktion mit dem Analyten die zwischen zwei Polen des Testelements anliegende elektrische Spannung und/oder die zwischen zwei Polen des Testelements bei definierter Spannung fließende Stromstärke beeinflusst. In diesem Fall ist also die Spannung oder Stromstärke die physikalisch messbare Größe, die mit einer entsprechenden in dem Analysesystem integrierten, als Spannungs- oder Strommesseinrichtung gestalteten Messanordnung bestimmt und deren mit der Konzentration des Analyten korrelierende Änderung in die Analysedaten (Konzentration des Analyten) umgerechnet wird.

Das erfindungsgemäße Analysesystem umfasst eine Testelement-Aufnahme zur Aufnahme und Positionierung eines Testelements in einer Analyseposition. Die Analyseposition ist dabei diejenige Position des Testelements in dem Analysesystem, in der die Analyse der Probe auf dem Testelement durchgeführt wird. Die Positionierung der Testelemente in dem Analysesystem ist sowohl für die Genauigkeit der Analyse als auch für die Einfachheit der Handhabung von großer Bedeutung. Ein Ziel bei der Durchführung analytischer Tests ist es, die eingesetzten Probenmengen zu reduzieren, beziehungsweise eine zuverlässige Analyse durchzuführen, auch wenn nur geringe Probenmengen vorhanden sind. Im Bereich der Blutzuckeranalyse muss dem Menschen ein Blutstropfen aus einem Körperteil entnommen werden, wobei es für ihn angenehmer ist, wenn die für den Test notwendige Blutmenge möglichst gering ist. Mit der Reduktion der Probenmengen ist eine Verkleinerung der Testelemente und insbesondere der auf den Testelementen befindlichen Nachweiszonen verbunden. Um eine exakte Analyse der Probe zu gewährleisten, ist eine präzise Positionierung der Nachweiszone in dem Analysesystem notwendig. Eine falsche räumliche Ausrichtung des Testelementes führt unmittelbar zu einer Verkleinerung der effektiven Messfläche und kann dadurch zu einem Messfehler führen.

Bei der vorliegenden Erfindung weist das Analysesystem vorzugsweise einen Schlitz in seinem Gehäuse auf, über den ein Testelement manuell in die Testelement-Aufnahme eingeschoben wird. Das Testelement kann aber auch automatisch, beispielsweise durch einen mittels einer Antriebseinheit bewegten Stößel in die Testelement-Aufnahme geschoben werden, insbesondere nachdem es aus einem Testelement-Magazin automatisch entnommen wurde. Das Testelement gleitet dabei, geführt durch die Mittel zum Führen des Testelements in dem Führungsteil der Testelement-Aufnahme bis in die Analyseposition. Die Mittel zum Führen des Testelements sind zum Beispiel eine untere Auflagefläche und zwei seitliche Führungsflächen, die das Testelement wie in einem Kanal führen. Die Mittel zum Führen können zum Beispiel auch im Inneren des Führungsteils vorhandene seitliche Nuten sein, in die das Testelement mit seinen beiden Längsrändern eingreift, oder mehrere seitliche Vorsprünge sein, auf denen die Längsränder des Testelements aufliegen.

In der Analyseposition dient das Verriegelungsteil zum "Verriegeln" (Fixieren) des Testelements, damit es in der für die Analyse vorgesehenen Position gehalten wird. Das Verriegeln verhindert ein ungewolltes Zurückziehen oder Herausfallen des Testelements während des Messprozesses. Das Verriegelungsteil umfasst einen Rahmen und ein Riegelelement. Der Rahmen dient zum Beispiel zum Befestigen des Verriegelungsteils an dem Führungsteil. Das Riegelelement ist mit dem Rahmen über ein Filmscharnier verbunden, wobei Rahmen, Filmscharnier und Riegelelement vorzugsweise einstückig ausgebildet sind. Filmscharniere (oder Filmgelenke) sind Bandscharniere und haben keine zusätzlichen mechanischen Teile. Filmscharniere sind in der Kunststoffbranche bekannt und dienen der relativen Schwenkbewegung zweier Teile, ohne dass das Scharnier Bolzen oder Ösen umfasst. Ein Beispiel für die Verwendung von Filmscharnieren im Stand der Technik ist der US 5,313,721 zu entnehmen, in der ein Clip zum Befestigen eines Ausweises ein Filmscharnier aufweist.

Bei der vorliegenden Erfindung ist das Riegelelement (durch Einwirkung einer äußeren Kraft auf das Riegelelement) gegenüber dem Rahmen um das Filmscharnier aus einer ersten in eine zweite, das Filmscharnier (vorzugsweise elastisch) verformende Position schwenkbar. Beim Schwenken des Riegelelements in die zweite Position wird das Filmscharnier durch Torsion vorzugsweise elastisch verformt, wobei die Verformungsenergie bei Entlastung des Filmscharniers, wenn das Riegelelement in die erste Position zurückschwenkt, wieder freigesetzt wird. Das verformte Filmscharnier erzeugt folglich eine definierte Rückstellkraft, die das Riegelelement in Richtung der ersten Position zurück schwenkt, sobald keine äußere Kraft mehr entgegengesetzt zu dieser Rückstellkraft wirkt. Die Größe der so erzeugten Rückstellkraft wird u.a. durch das Material und die Form des Filmscharniers bestimmt. Somit hat die Verwendung eines Filmscharniers in dem erfindungsgemäßen Analysesystem auch den Vorteil, dass kein weiteres Federelement erforderlich ist, um das Riegelelement in seiner Grundposition zu halten bzw. um es wieder in seine Grundposition (insbesondere seine erste Position) zurückzuschwenken.

Das Riegelelement umfasst eine Rastnase, die in eine Ausnehmung eines in der Analyseposition positionierten Testelements eingreifen kann, um dieses zu verriegeln, wobei sich das Riegelelement in der ersten Position befindet oder zumindest aus der zweiten in Richtung der ersten Position geschwenkt ist. Die Ausnehmung kann eine durch die gesamte Dicke des Testelements von der einen bis zur anderen Seite verlaufende Öffnung oder eine in ihrer Tiefe einem Teil der Dicke des Testelements entsprechende Vertiefung sein. Beim Einführen eines Testelements in die Testelement-Aufnahme befindet sich das Riegelelement in der zweiten Position, wobei die Rastnase über die Oberfläche des Testelements gleitet. Sobald das Testelement die Analyseposition erreicht, rastet die Rastnase in die Ausnehmung ein, wobei das Riegelelement in Richtung der ersten Position schwenkt. Beim manuellen Einschieben des Testelements in die Testelement-Aufnahme ergibt sich durch das Einrasten für den Benutzer vorzugsweise eine merkliche taktile Rückmeldung, wenn das Testelement in die Analyseposition gelangt. Umgekehrt muss zum Entfernen des Testelements die Verriegelung gelöst werden, wobei die Rastnase aus der Ausnehmung in die zweite Position geschwenkt und das Testelement so wieder freigegeben wird. Wenn sich kein Testelement in der Testelement-Aufnahme befindet, ruht das Riegelelement vorzugsweise in der ersten Position. Das erfindungsgemäße Analysesystem hat den Vorteil, dass die Testelement-Aufnahme im Wesentlichen aus den zwei Komponenten Führungsteil und Verriegelungsteil zusammengesetzt wird, so dass nur wenige Fertigungs- und Montageschritte erforderlich sind. Insbesondere durch die Verwendung des Filmscharniers und das gegebenenfalls einstückige Zusammenfassen von Rahmen, Filmscharnier und Riegelelement, ergibt sich bei der Konstruktion des Verriegelungsteils eine kostenbewusste Lösung, durch die Montagezeiten gegenüber dem Stand der Technik gesenkt und Einzelteile eingespart werden.

Die vorliegende Erfindung bezieht sich weiterhin auf ein Verfahren gemäß Anspruch 10.

Das erfindungsgemäße Analysesystem ist vorzugsweise zur Durchführung des erfindungsgemäßen Verfahrens geeignet.

Gemäß einer bevorzugten Ausführungsform der vorliegenden Erfindung sind das Verriegelungsteil und das Führungsteil zwei Kunststoffspritzgussteile. Vorzugsweise werden die beiden Teile durch ein Einkomponenten-Spritzgussverfahren hergestellt. Es ist jedoch auch Mehrkomponenten-Spritzgießen möglich (zum Beispiel Herstellen des Rahmens, des Filmscharniers und/oder des Riegelelements aus verschiedenen Materialien). Vorzugsweise ist das Verriegelungsteil in dem Analysesystem durch eine Abdeckung (z.B. eine Kappe) bedeckt, die eine (indirekte) äußere Kraftausübung auf das Riegelelement zum Schwenken in die zweite Position erlaubt (wobei die Kappe mit dem Riegelelement relativ zu dem Rahmen und zu dem Führungsteil geschwenkt wird) und die zum Schutz des Verriegelungsteils vor eindringendem Schmutz, zur taktil angenehmen Betätigung des Riegelelements durch einen Benutzer und auch zum Herstellen eines ansprechenden Designs dienen kann. Die Abdeckung kann von dem Verriegelungsteil abnehmbar sein, um ein Reinigen des Verrieglungsteils zu erlauben. Ferner können die Abdeckung, der Rahmen und der Riegel von dem Führungsteil abnehmbar sein, um ein Reinigen des Führungsteils und ggf. der davon abgenommen Teile zu ermöglichen.

Spritzgießen ist ein im Stand der Technik bekanntes Verfahren, bei dem ein plastifizierter Werkstoff (Spritzgießmasse) (insbesondere ein Thermo- oder Duroplaste) in ein Umformwerkzeug (Spritzgießwerkzeug) mit hohem Druck eingespritzt wird und dort unter Druckeinwirkung in den festen Zustand übergeht. Das Spritzgießteil kann dann dem Spritzgießwerkzeug entnommen werden. Mehrkomponentenspritzgießen ist ebenfalls ein im Stand der Technik bekanntes Verfahren. Beispielsweise eignet sich das sogenannte Verbundspritzgießen zur Herstellung von Mehrkomponenten-Spritzgießbauteilen für das erfindungsgemäße Analysesystem. Dabei werden zwei oder mehr Materialien nacheinander in ein Spritzgießwerkzeug gespritzt, wodurch sie an ihren Grenzflächen materialschlüssig zusammengefügt werden. Die Geometrie der in dem Spritzgießwerkzeug vorhandenen Kavität wird zwischen den verschiedenen Einspritzungen verändert.

Das Filmscharnier ist vorzugsweise aus Polypropylen spritzgegossen. Dieser Werkstoff hat die nötige Weichheit und Dehnbarkeit für eine dauerhafte Funktion des Filmscharniers. Weitere mögliche Werkstoffe zur Fertigung des Filmscharniers sind zum Beispiel Polyethylen, Ethylen/Vinylacetat oder Polyamide.

Gemäß einer bevorzugten Ausführungsform der vorliegenden Erfindung ist die Testelement-Aufnahme zumindest teilweise von dem Analysesystem abnehmbar. Ferner ist das Verriegelungsteil (insbesondere der Rahmen) vorzugsweise lösbar mit dem Führungsteil verbunden. Durch die Abnehmbarkeit der Testelement-Aufnahme oder zumindest eines Teils davon und/oder die lösbare Verbindung zwischen Verriegelungsteil und Führungsteil ist eine Reinigung der mit dem Testelement in Berührung kommenden Flächen in dem Analysesystem möglich, insbesondere um Probenreste von diesen Flächen zu entfernen. Als lösbare Verbindung zwischen Testelement-Aufnahme und Analysesystem und/oder zwischen Verriegelungsteil und Führungsteil ist zum Beispiel eine Steck-, Schnapp-, Rast- oder Klammerverbindung denkbar. Die Testelement-Aufnahme wird jedoch möglichst so gestaltet, dass die mit der Probe benetzten Flächen des Testelements nicht mit den Oberflächen des Verriegelungsteils und des Führungsteils in Berührung kommen und somit die Verschmutzung der Teile gering gehalten wird.

Gemäß einer bevorzugten Ausführungsform der vorliegenden Erfindung ist das Riegelelement in der ersten Position vorgespannt. Das Riegelelement wird in Abwesenheit des Testelements vorzugsweise unter Vorspannung in einer definierten Ruheposition, insbesondere gegen die Auflagefläche für das Testelement in dem Führungsteil gehalten. Das Einschieben des Testelements erfolgt dann gegen einen gewissen Widerstand, da das Riegelelement entgegen der Vorspannung von dem Testelement angehoben wird und über die Oberfläche des Testelements gleitet. Beim Erreichen der Ausnehmung in dem Testelement rastet die Rastnase des Riegelelements durch die Vorspannung automatisch in der Ausnehmung ein und fixiert das Testelement in der Analyseposition.

Gemäß einer bevorzugten Ausführungsform der vorliegenden Erfindung ist das Riegelelement als um das Filmscharnier drehbarer Hebel mit einem ersten und einem zweiten Hebelarm ausgebildet, wobei der erste Hebelarm die Rastnase aufweist und das Riegelelement durch Krafteinwirkung auf den zweiten Hebelarm aus der ersten in die zweite Position schwenkbar ist. Beispielsweise kann das Filmscharnier in der Mitte des Riegelelements angeordnet sein, so dass das Riegelelement zwei gleich lange Hebelarme umfasst. Die Hebelarme sind vorzugsweise starr zueinander angeordnet, so dass sie beim Schwenken des Riegelelements nicht ihre Position relativ zueinander verändern. Die beiden Hebelarme können eine gemeinsame Längsachse aufweisen (α = 180°) oder mit einem Winkel α < 180° zueinander angeordnet sein. Drückt der Benutzer des erfindungsgemäßen Analysesystems auf den zweiten Hebelarm, so schwenkt das Riegelelement um das Filmscharnier relativ zu dem Rahmen und der erste Hebelarm mit der Rastnase wird aus seiner Lage in der ersten Position des Riegelelements in seine Lage in der zweiten Position des Riegelelements bewegt. Insbesondere wird dadurch die Rastnase aus ihrem Eingriff in eine Ausnehmung eines Testelements in der Analyseposition bewegt und das Testelement daher für eine Entnahme aus der Testelement-Aufnahme freigegeben.

Vorzugsweise enthält der zweite Hebelarm ein Schiebeelement, das beim Schwenken des Riegelelements aus der ersten in die zweite Position eine schiebende Kraft auf ein in der Analyseposition positioniertes Testelement in einer Abgaberichtung ausübt. Die Abgaberichtung ist dabei diejenige Richtung, in der die Testelement-Aufnahme das entriegelte Testelement (zum Beispiel zur Entsorgung nach einer erfolgten Probenanalyse) abgibt. Diese Ausführungsform hat den Vorteil, dass die Verrastung des Testelements und der Auswurfmechanismus über ein einziges Bauelement in dem Analysesystem (nämlich das Riegelelement) erfolgt. Die schiebende Kraft des Schiebeelements hat eine gewisse Lösewirkung für das Testelement, um das gegebenenfalls durch Probenreste (zum Beispiel Blutreste) in der Testelement-Aufnahme festgeklebte Testelement wieder zu lockern, woraufhin das Testelement zum Beispiel durch manuelles Herausziehen oder durch Herausschütteln aus der Testelement-Aufnahme entnommen werden kann. Ferner kann die Schiebekraft ein zumindest teilweises automatisches Herausschieben des Testelements aus der Testelement-Aufnahme bewirken.

Die Erfindung bezieht sich weiterhin auf ein Verfahren zur Analyse einer Probe auf einem analytischen Testelement, bei dem zum Entfernen des Testelements aus der Testelement-Aufnahme des Analysesystems das Riegelelement in die zweite Position geschwenkt wird und dabei gleichzeitig automatisch die Rastnase aus der Ausnehmung des Testelements bewegt wird und ein an dem Riegelelement vorhandenes Schiebeelement eine Kraft auf das in der Analyseposition positionierte Testelement in einer Abgaberichtung ausübt.

Gemäß einer bevorzugten Ausführungsform der vorliegenden Erfindung enthält das Analysesystem eine Messanordnung zur photometrischen Analyse einer Probe auf einem analytischen Testelement, das sich in einer Analyseposition in der Testelement-Aufnahme des Analysesystems befindet. Vorzugsweise umfasst das Analysesystem eine Messanordnung mit mindestens einer Lichtquelle und mindestens einem Detektor. Die Lichtquelle und der Detektor sind so angeordnet, dass Licht von der Lichtquelle durch einen lichtdurchlässigen Bereich des Führungsteils zu einem Testfeld eines in der Analyseposition angeordneten Testelements und reflektiert von dem Testfeld durch den lichtdurchlässigen Bereich zu dem Detektor gelangen kann. Der lichtdurchlässige Bereich ist beispielsweise ein Fenster, das offen oder mit einem lichtdurchlässigen Material gefüllt ist, eine Blende, eine Linse oder eine beliebige Kombination aus diesen Elementen. Die Lichtquelle ist zum Beispiel eine Licht emittierende Diode (LED). Das Führungsteil und das Verriegelungsteil sorgen für eine genaue Positionierung des Testfeldes relativ zu der Lichtquelle und dem Detektor während der Messung.

Während der Messungen ist das Testelement in der Testelementaufnahme so positioniert, dass das Licht von der Lichtquelle über den lichtdurchlässigen Bereich des Führungsteils auf ein die Probe und Reagenzien enthaltendes Testfeld auf dem Testelement gerichtet wird. Je nach Konzentration des Analyten in der Probe wird ein Anteil des auf das Testelement treffenden Lichts an diesem so reflektiert, dass es durch den lichtdurchlässigen Bereich des Führungsteils zu dem Detektor gelangt. Der Detektor ist zum Beispiel eine Photodiode. Die Lichtquelle und der Detektor sind vorzugsweise durch ein Abschirmmittel (zum Beispiel eine Blende) voneinander so abgeschirmt, dass die direkte Einstrahlung von Licht der Lichtquelle auf den Detektor weitgehend verhindert wird.

Vorzugsweise enthält die photometrische Messanordnung des erfindungsgemäßen Analysesystems keine optischen Linsen, sondern nur optische Blenden. Eine solche Messanordnung ist kostengünstiger als eine optische Linsen enthaltende Messanordnung und es wird die Toleranzempfindlichkeit der Messanordnung reduziert.

Vorzugsweise übernimmt das Verriegelungselement bei einem erfindungsgemäßen Analysesystem mit photometrischer Messanordnung die Funktionen
a) der Testelementfixierung in der Analyseposition,
b) der taktilen Rückmeldung an einen Benutzer beim Erreichen der Analyseposition durch das Testelement,
c) der optischen Abschirmung der Messanordnung gegen Fremdlicht und
d) des Lösens des Testelements bei der Entnahme.

Gemäß einer bevorzugten Ausführungsform der vorliegenden Erfindung sind die Lichtquelle und der Detektor auf einer Platine angeordnet, an der das Führungsteil fixiert ist, wobei mindestens ein Abstandshalter zwischen der Platine und dem Führungsteil angeordnet ist. Die Platine enthält dabei vorzugsweise Leiterbahnen, über die die Lichtquelle und der Detektor mit elektrischer Spannung versorgt werden. Der Abstandshalter hält das Führungsteil und die Platine in einem definierten Abstand zueinander und damit auch die Lichtquellen-Detektoranordnung in einem definierten Abstand zu dem Führungsteil. Folglich wird ein in das Führungsteil bis in die Analyseposition eingeführtes Testelement in einer definierten Position relativ zu der Messanordnung gehalten, um bestimmte Messbedingungen zu gewährleisten.

Vorzugsweise enthält das erfindungsgemäße Analysesystem ferner einen Schalter, der mit der Rastnase des Riegelelements so zusammenwirkt, dass er in der ersten Position des Riegelelements durch die Rastnase betätigt wird. Mittels dieses Schalters erkennt das Analysesystem, wann ein Testelement in der Analyseposition positioniert ist. Der Schalter dient dazu, die Positionierung des Testelements elektrisch zu signalisieren. Dadurch kann beispielsweise ein Signal zum Einschalten des Analysesystems oder ein Startsignal zum Starten einer Messung ausgelöst werden. Damit ist der Startvorgang nicht von Längstoleranzen des Testelements oder von Schalthysteresen abhängig. Zum Auslösen eines Startsignals kann zum Beispiel die Schaltlogik detektiert werden, so dass ein Start nur dann zulässig ist, wenn das Riegelelement vor einer Messung von der zweiten in die erste Position übergeht.

Gemäß einer weiteren bevorzugten Ausführungsform der vorliegenden Erfindung scannt eine optische Scannvorrichtung beim Aufnehmen des Testelements in die Testelement-Aufnahme das Testelement entlang einer Oberfläche ab. Bei entsprechender Gestaltung des Oberflächenprofils, zum Beispiel durch dunkle und helle Felder, die einen definierten Verlauf einer Reflexionsmessung beim Einschieben des Testelements ergeben, kann zum Beispiel das Starten des Einschiebens eines Testelements in das Führungsteil und/oder das Erreichen der Analyseposition durch das Testelement erkannt werden. Dadurch können Signale zum Einschalten des Analysesystems und/oder zum Starten des Messvorgangs ausgelöst werden. Ferner kann anhand des detektierten, durch die Oberfläche des Testelements reflektierten Lichts ein Korrekturwert für eine folgende photometrische Messung durch eine optische Messanordnung des Analysesystems bestimmt werden. Zusätzlich kann bei dieser Ausführungsform ein durch die Rastnase des Riegelelements zu betätigender Schalter vorgesehen sein. Es kann jedoch auch auf den Schalter verzichtet werden.

Die vorliegende Erfindung bezieht sich weiterhin auf die Verwendung eines erfindungsgemäßen Analysesystems zur Messung der Konzentration von Glukose in einer Körperflüssigkeit auf einem Teststreifen. Vorzugsweise handelt es sich bei dem Teststreifen um ein Kapillarspalt-Testelement, bei dem die Probe (zum Beispiel Blut aus der Fingerbeere) an den Kapillarspalt herangeführt wird und durch diesen der Nachweiszone (dem Testfeld) zugeführt wird. Es kann jedoch auch ein Teststreifen verwendet werden, bei dem die Probe direkt auf die Nachweiszone aufgegeben und der Teststreifen anschließend in die Testelement-Aufnahme eingeschoben wird.

Anhand der Zeichnung wird die Erfindung nachstehend näher erläutert.

Es zeigt:

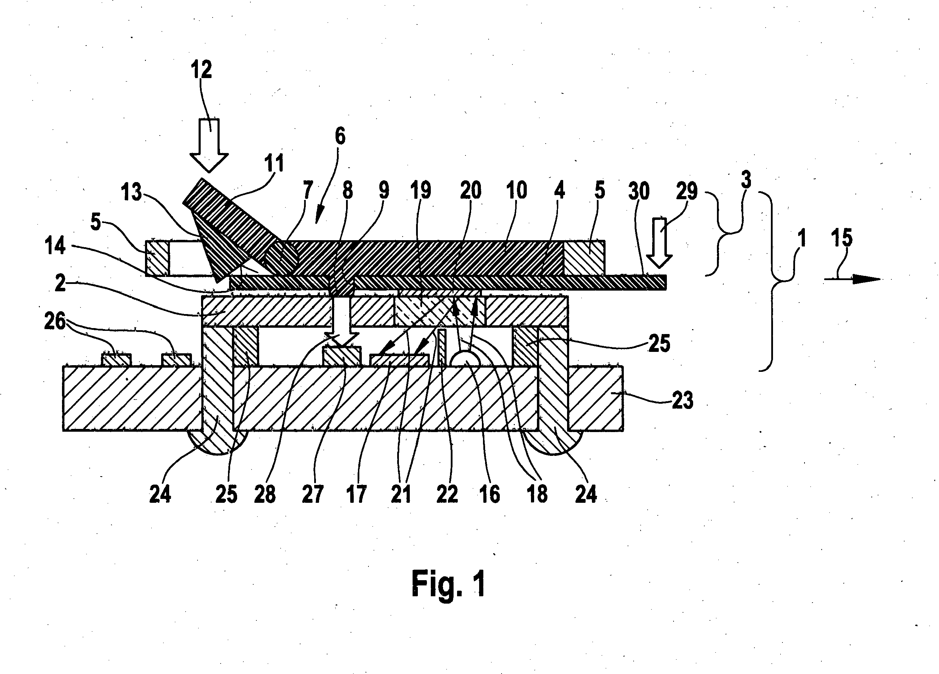

- Figur 1: schematisch ein erfindungsgemäßes Analysesystem.

Das Analysesystem gemäß Figur 1 umfasst eine Testelement-Aufnahme 1, die ein Führungsteil 2 und ein Verriegelungsteil 3 enthält. Das Führungsteil 2 dient zum Führen eines Testelements 4 beim Einlegen und Entnehmen aus der Testelement-Aufnahme 1. Dazu weist das Führungsteil 2 Mittel zum Führen des Testelements 4 in Form von (nicht dargestellten) seitlichen Führungsflächen und einer Auflagefläche auf. Das Verriegelungsteil 3 weist einen Rahmen 5 und ein Riegelelement 6 auf. Das Riegelelement 6 ist ein Balken, der über ein Filmscharnier 7 mit dem Rahmen 5 einstückig verbunden ist. Das Riegelelement 6 ist gegenüber dem Rahmen 5 um das Filmscharnier 7 aus einer ersten in eine zweite, das Filmscharnier 7 verformende Position schwenkbar. In Figur 1 ist das Riegelelement 6 in einer ersten Position dargestellt. Das Riegelelement 6 weist eine Rastnase 8 auf, die in dieser ersten Position des Riegelelements 6 in eine Ausnehmung 9 des in der Analyseposition positionierten Testelements 4 eingreift. Das Testelement 4 ist daher durch das Riegelelement 6 in der Analyseposition verriegelt. Vorzugsweise ist das Riegelelement 6 in dieser Position vorgespannt.

Das Riegelelement 6 gemäß Figur 1 ist ein um das Filmscharnier 7 drehbarer Hebel mit einem ersten Hebelarm 10 und einem zweiten Hebelarm 11. Der erste Hebelarm 10 weist die Rastnase 8 auf. Der zweite Hebelarm 11 ist in einem Winkel α < 180° (α *≅* 135°) relativ zu dem ersten Hebelarm 10 angeordnet. Das Riegelelement 6 ist durch Krafteinwirkung 12 auf den zweiten Hebelarm 11 aus der ersten in eine (nicht dargestellte) zweite Position schwenkbar, in der die Rastnase 8 nicht mehr in die Ausnehmung 9 des Testelements 4 eingreift und das Testelement 4 somit entriegelt ist.

Der zweite Hebelarm 11 enthält ein Schiebeelement 13, das beim Schwenken des Riegelelements 6 (aufgrund der Krafteinwirkung 12) aus der ersten in die zweite Position mittels der Schiebefläche 14 eine schiebende Kraft und/ oder ein Lösemoment auf das Testelement 4 in der Abgaberichtung 15 ausübt. Dadurch wird das Testelement 4 aus der Analyseposition gelöst und kann durch einen Benutzer aus der Testelement-Aufnahme in Abgaberichtung 15 herausgezogen und entsorgt werden.

Das Analysesystem umfasst ferner eine Messanordnung mit einer Lichtquelle 16 (LED) und einem Detektor 17 (Photodiode). Die Lichtquelle 16 und der Detektor 17 sind so angeordnet, dass das durch die Lichtquelle 16 eingestrahlte Licht 18 durch einen lichtdurchlässigen Bereich 19 des Führungsteils 2 zu dem Testfeld 20 des in der Analyseposition angeordneten Testelements 4 gelangen kann. Der lichtdurchlässige Bereich 19 ist eine Blende, die durch ein Kunststofffenster gefüllt ist. Das an dem Testfeld 20 reflektierte Licht 21 gelangt wiederum durch den lichtdurchlässigen Bereich 19 zu dem Detektor 17, wobei ein Abschirmmittel 22 das eingestrahlte Licht 18 von dem reflektierten Licht 21 trennt. Die Lichtquelle 16 und der Detektor 17 sind auf einer Platine 23 angeordnet, an der das Führungsteil 2 mittels Fixierelementen 24 fixiert ist, wobei Abstandshalter 25 zwischen der Platine 23 und dem Führungsteil 2 angeordnet sind. Die Platine 23 trägt außerdem weitere Bauteile 26 des Analysesystems.

Auf der Platine 23 ist ferner ein Schalter 27 angeordnet, der über einen Schaltstößel 28 mit der Rastnase 8 so zusammenwirkt, dass er in der ersten Position des Riegelelements 6 (die in Figur 1 dargestellt ist) durch die Rastnase 8 mittels des Schaltstößels 28 betätigt wird.

Zur Durchführung einer Messung mit dem Analysesystem erfolgt eine Probenaufgabe 29 auf ein aus der Testelement-Aufnahme herausragendes Ende 30 des in der Analyseposition positionierten Testelements, von wo aus die Probe (zum Beispiel ein Blutstropfen) mittels einer (nicht dargestellten) Kapillare zum Testfeld 20 transportiert wird. Das dargestellte Analysesystem führt eine photometrische Messung zur Bestimmung der Konzentration eines Analyten in der Probe durch.

### Bezugszeichenliste

- 1: Testelement-Aufnahme
- 2: Führungsteil
- 3: Verriegelungsteil
- 4: Testelement
- 5: Rahmen
- 6: Riegelelement
- 7: Filmscharnier
- 8: Rastnase
- 9: Ausnehmung
- 10: erster Hebelarm
- 11: zweiter Hebelarm
- 12: Krafteinwirkung
- 13: Schiebeelement
- 14: Schiebefläche
- 15: Abgaberichtung
- 16: Lichtquelle
- 17: Detektor
- 18: eingestrahltes Licht
- 19: lichtdurchlässiger Bereich
- 20: Testfeld
- 21: reflektiertes Licht
- 22: Abschirmmittel
- 23: Platine
- 24: Fixierelemente
- 25: Abstandshalter
- 26: weitere Bauteile
- 27: Schalter
- 28: Schaltstößel
- 29: Probenaufgabe
- 30: Ende des Testelements

## Patentansprüche

1. Analysesystem zur Analyse einer Probe auf einem analytischen Testelement (4), umfassend eine Testelement-Aufnahme (1) zur Aufnahme und Positionierung eines Testelements (4) in einer Analyseposition, **dadurch gekennzeichnet, dass** die Testelement-Aufnahme (1) ein Führungsteil (2) und ein Verriegelungsteil (3) enthält, wobei das Führungsteil (2) Mittel zum Führen eines Testelements (4) in die und aus der Analyseposition aufweist und das Verriegelungsteil (3) einen Rahmen (5) und ein Riegelelement (6) umfasst, die über ein Filmscharnier (7) miteinander verbunden sind, wobei das Riegelelement (6) gegenüber dem Rahmen (5) um das Filmscharnier (7) aus einer ersten in eine zweite, das Filmscharnier (7) verformende Position schwenkbar ist und das Riegelelement (6) eine Rastnase (8) zum Eingreifen in eine Ausnehmung (9) eines in der Analyseposition positionierten Testelements (4) in der ersten Position des Riegelelements (6) umfasst, wobei das Riegelelement (6) als um das Filmscharnier (7) drehbarer Hebel mit einem ersten und einem zweiten Hebelarm (10, 11) ausgebildet ist, wobei der erste Hebelarm (10) die Rastnase (8) aufweist und das Riegelelement (6) durch Krafteinwirkung (12) auf den zweiten Hebelarm (11) aus der ersten in die zweite Position schwenkbar ist, wobei der zweite Hebelarm (11) ein Schiebeelement (13) enthält, das beim Schwenken des Riegelelements (6) aus der ersten in die zweite Position eine schiebende Kraft auf ein in der Analyseposition positioniertes Testelement (4) in eine Abgaberichtung (15) ausübt.

2. Analysesystem gemäß Anspruch 1, **dadurch gekennzeichnet, dass** der Rahmen (5) und das Riegelelement (6) einstückig über das Filmscharnier (7) miteinander verbunden sind.

3. Analysesystem gemäß einem der Ansprüche 1 oder 2, **dadurch gekennzeichnet, dass** das Verriegelungsteil (3) und das Führungsteil (2) Kunststoffspritzgussteile sind.

4. Analysesystem gemäß einem der Ansprüche 1 bis 3, **dadurch gekennzeichnet, dass** die Testelement-Aufnahme (1) zumindest teilweise von dem Analysesystem abnehmbar ist.

5. Analysesystem gemäß einem der Ansprüche 1 bis 4, **dadurch gekennzeichnet, dass** das Verriegelungsteil (3) lösbar mit dem Führungsteil (2) verbunden ist.

6. Analysesystem gemäß einem der Ansprüche 1 bis 5, **dadurch gekennzeichnet, dass** das Riegelelement (6) in der ersten Position vorgespannt ist.

7. Analysesystem gemäß einem der Ansprüche 1 bis 6, umfassend eine Messanordnung mit einer Lichtquelle (16) und einem Detektor (17), die so angeordnet sind, dass Licht (18) von der Lichtquelle (16) durch einen lichtdurchlässigen Bereich (19) des Führungsteils (2) zu einem Testfeld (20) eines in der Analyseposition angeordneten Testelements (4) und reflektiert (21) von dem Testfeld (20) durch den lichtdurchlässigen Bereich (19) zu dem Detektor (17) gelangen kann.

8. Analysesystem gemäß Anspruch 7, **dadurch gekennzeichnet, dass** die Lichtquelle (16) und der Detektor (17) auf einer Platine (23) angeordnet sind, an der das Führungsteil (2) fixiert ist, wobei mindestens ein Abstandshalter (25) zwischen der Platine (23) und dem Führungsteil (2) angeordnet ist.

9. Analysesystem gemäß einem der Ansprüche 1 bis 8, enthaltend einen Schalter (28), der mit der Rastnase (8) des Riegelelements (6) so zusammenwirkt, dass er in der ersten Position des Riegelelements (6) durch die Rastnase (8) betätigt wird.

10. Verfahren zur Analyse einer Probe auf einem analytischen Testelement in einem Analysesystem, umfassend die Schritte
• Aufnehmen eines Testelements in eine Testelement-Aufnahme des Analysesystems, wobei das Testelement durch Mittel zum Führen des Testelements in einem Führungsteil der Testelement-Aufnahme in eine Analyseposition geführt wird und das Testelement durch ein Verriegelungsteil der Testelement-Aufnahme, das einen Rahmen und ein Riegelelement aufweist, die über ein Filmscharnier miteinander verbunden sind, in der Analyseposition verriegelt wird, indem das Riegelelement um das Filmscharnier aus einer zweiten in eine erste Position schwenkt, in der eine Rastnase des Riegelelements in eine Ausnehmung des in der Analyseposition positionierten Testelements eingreift, und
• Analysieren der Probe in einem Testfeld des Testelements durch eine Messanordnung des Analysesystems,
wobei das Testelement aus der Testelement-Aufnahme entfernt wird, wobei das Riegelelement in die zweite Position geschwenkt wird und dabei gleichzeitig automatisch die Rastnase aus der Ausnehmung des Testelements bewegt wird und ein an dem Riegelelement vorhandenes Schiebeelement eine Kraft auf das in der Analyseposition positionierte Testelement in eine Abgaberichtung ausübt.

11. Verfahren gemäß Anspruch 10, **dadurch gekennzeichnet, dass** beim Aufnehmen des Testelements in die Testelement-Aufnahme eine optische Scannvorrichtung das Testelement entlang einer Oberfläche abscannt.

12. Verwendung eines Analysesystems gemäß einem der Ansprüche 1 bis 9 zur Messung der Konzentration von Glukose in einer Körperflüssigkeit auf einem Teststreifen.

## Claims

1. Analysis system for analysing a sample on an analytical test element (4), comprising a test element receptacle (1) for receiving and positioning a test element (4) in an analysis position, **characterized in that** the test element receptacle (1) contains a guide part (2) and a lock part (3), with the guide part (2) having means for guiding a test element (4) into and out of the analysis position, and the lock part (3) comprising a frame (5) and a bolt element (6), which frame and bolt element are connected to one another by means of a film hinge (7), it being possible to pivot the bolt element (6) out of a first position into a second position, which deforms the film hinge (7), with respect to the frame (5) about the film hinge (7), and the bolt element (6) comprising a latching lug (8) for engaging in a recess (9) in test element (4), which is positioned in the analysis position, in the first position of the bolt element (6), with the bolt element (6) being in the form of a lever, which can rotate about the film hinge (7), having a first and a second lever arm (10, 11), with the first lever arm (10) having the latching lug (8), and it being possible to pivot the bolt element (6) out of the first position into the second position by virtue of the action of force (12) on the second lever arm (11), with the second lever arm (11) containing a pushing element (13) which exerts a pushing force on a test element (4), which is positioned in the analysis position, in a discharge direction (15) when the bolt element (6) is pivoted out of the first position into the second position.

2. Analysis system according to Claim 1, **characterized in that** the frame (5) and the bolt element (6) are integrally connected to one another by means of the film hinge (7).

3. Analysis system according to either of Claims 1 and 2, **characterized in that** the lock part (3) and the guide part (2) are injection-moulded plastic parts.

4. Analysis system according to one of Claims 1 to 3, **characterized in that** the test element receptacle (1) can be at least partially removed from the analysis system.

5. Analysis system according to one of Claims 1 to 4, **characterized in that** the lock part (3) is releasably connected to the guide part (2).

6. Analysis system according to one of Claims 1 to 5, **characterized in that** the bolt element (6) is prestressed in the first position.

7. Analysis system according to one of Claims 1 to 6, comprising a measurement arrangement with a light source (16) and a detector (17) which are arranged such that light (18) from the light source (16) can pass through a light-transmissive region (19) of the guide part (2) to a test field (20) of a test element (4) which is arranged in the analysis position and, in a reflected manner (21), from the test field (20) through the light-transmissive region (19) to the detector (17).

8. Analysis system according to Claim 7, **characterized in that** the light source (16) and the detector (17) are arranged on a printed circuit board (23) on which the guide part (2) is fixed, with at least one spacer (25) being arranged between the printed circuit board (23) and the guide part (2).

9. Analysis system according to one of Claims 1 to 8, comprising a switch (28) which interacts with the latching lug (8) of the bolt element (6) such that the said switch is operated by the latching lug (8) in the first position of the bolt element (6).

10. Method for analysis of a sample on an analytical test element in an analysis system, comprising the steps of
• receiving a test element in a test element receptacle of the analysis system, with the test element being guided into an analysis position by means for guiding the test element in a guide part of the test element receptacle, and the test element being locked in the analysis position by a lock part of the test element receptacle, which has a frame and a bolt element which are connected to one another by means of a film hinge, by the bolt element pivoting about the film hinge out of a second position into a first position in which a latching lug of the bolt element engages in a recess in the test element which is positioned in the analysis position, and
• analysing the sample in a test field of the test element using a measurement arrangement of the analysis system,
with the test element being removed from the test element receptacle, with the bolt element being pivoted into the second position and in the process the latching lug automatically being moved out of the recess in the test element at the same time, and a pushing element, which is provided on the bolt element, exerting a force on the test element, which is positioned in the analysis position, in a discharge direction.

11. Method according to Claim 10, **characterized in that** an optical scanning apparatus scans the test element along one surface when the test element is received in the test element receptacle.

12. Use of an analysis system according to one of Claims 1 to 9 for measuring the concentration of glucose in a body fluid on a test strip.

## Revendications

1. Système d'analyse permettant d'analyser un échantillon sur un élément analytique de test (4), le système présentant un logement (1) d'élément de test qui loge et positionne un élément de test (4) dans une position d'analyse,
**caractérisé en ce que**
le logement (1) d'élément de test contient une partie de guidage (2) et une partie de verrouillage (3),
la partie de guidage (2) présentant des moyens qui guident un élément de test (4) dans la position d'analyse et hors de celle-ci et l'élément de verrou (3) comportant un bâti (5) et un élément de verrou (6) reliés l'un à l'autre par une charnière (7) en film,
l'élément de verrou (6) pouvant être pivoté par rapport au bâti (5) autour de la charnière (7) en film depuis une première position jusque dans une deuxième position en déformant la charnière (7) en film et l'élément de verrou (6) comportant un bec d'encliquetage (8) qui s'engage dans une découpe (9) ménagée dans un élément de test (4) positionné en position d'analyse lorsque l'élément de verrou (6) est dans la première position,
l'élément de verrou (6) étant configuré comme levier pouvant tourner autour de la charnière (7) en film et présentant un premier et un deuxième bras de levier (10, 11),
le premier bras de levier (10) présentant le bec d'encliquetage (8) et l'élément de verrou (6) pouvant pivoter depuis la première jusque dans la deuxième position par application (12) d'une force sur le deuxième bras de levier (11),
le deuxième bras de levier (11) contenant un élément coulissant (13) qui, lorsque l'élément de verrou (6) pivote de la première jusque dans la deuxième position, exerce une force de déplacement dans une direction de sortie (15) sur un élément de test (4) positionné en position d'analyse.

2. Système d'analyse selon la revendication 1, **caractérisé en ce que** le bâti (5) et l'élément de verrou (6) sont raccordés d'un seul tenant par l'intermédiaire de la charnière (7) en film.

3. Système d'analyse selon l'une des revendications 1 ou 2, **caractérisé en ce que** la partie de verrouillage (3) et la partie de guidage (2) sont des parties en matière synthétique moulée par injection.

4. Système d'analyse selon l'une des revendications 1 à 3, **caractérisé en ce que** le logement (1) d'élément de test peut être retiré au moins en partie du système d'analyse.

5. Système d'analyse selon l'une des revendications 1 à 4, **caractérisé en ce que** la partie de verrouillage (3) est raccordée de manière libérable à la partie de guidage (2).

6. Système d'analyse selon l'une des revendications 1 à 5, **caractérisé en ce que** l'élément de verrou (6) est précontraint dans la première position.

7. Système d'analyse selon l'une des revendications 1 à 6, comprenant un ensemble de mesure doté d'une source de lumière (16) et d'un détecteur (17) disposé de telle sorte que la lumière (18) émise par la source de lumière (16) peut passer à travers une partie transparente (19) de la partie de guidage (2) vers un champ de test (20) d'un élément de test (4) disposé en position d'analyse et être réfléchie (21) par le champ de test (20) vers le détecteur (17) à travers la partie transparente (19).

8. Système d'analyse selon la revendication 7, **caractérisé en ce que** la source de lumière (16) et le détecteur (17) sont disposés sur une carte de circuit (23) sur laquelle la partie de guidage (2) est fixée, au moins un écarteur (25) étant disposé entre la carte de circuit (23) et la partie de guidage (2).

9. Système d'analyse selon l'une des revendications 1 à 8, contenant un commutateur (28) qui coopère avec le bec d'encliquetage (8) de l'élément de verrou (6) de telle sorte qu'il est actionné par le bec d'encliquetage (8) lorsque l'élément de verrou (6) se trouve dans la première position.

10. Procédé d'analyse d'un échantillon sur un élément analytique de test d'un système d'analyse, le procédé comportant les étapes qui consistent à :
loger un élément de test dans un logement de l'élément de test du système d'analyse, l'élément de test étant amené par des moyens de guidage de l'élément de test dans une partie de guidage du logement d'élément de test jusque dans une position d'analyse et l'élément de test étant verrouillé dans la position d'analyse par une partie de verrouillage du logement d'élément de test qui présente un bâti et un élément de verrou reliés l'un à l'autre par une charnière en film par le fait que l'élément de verrou pivote autour de la charnière en film, d'une deuxième position jusque dans une première position dans laquelle un bec d'encliquetage de l'élément de verrou s'engage dans une découpe ménagée dans l'élément de test placé en position d'analyse et
faire analyser l'échantillon dans un champ de test de l'élément de test par un ensemble de mesure du système d'analyse,
l'élément de test étant enlevé du logement de l'élément de test, l'élément de verrou étant pivoté dans la deuxième position et le bec d'encliquetage étant simultanément déplacé automatiquement hors de la découpe de l'élément de test, un élément coulissant prévu dans l'élément de verrou exerçant une force dans une direction de sortie sur l'élément de test placé en position d'analyse.

11. Procédé selon la revendication 10, **caractérisé en ce que** lors du placement de l'élément de test dans le logement d'élément de test, un dispositif optique de balayage balaie l'élément de test le long d'une surface.

12. Utilisation d'un système d'analyse selon l'une des revendications 1 à 9 pour mesurer la concentration de glucose dans un liquide corporel placé sur un ruban de test.
